# EUROPEAN PATENT SPECIFICATION

(11) **EP 2 255 234 B1**
(45) Date of publication and mention of the grant of the patent: **19.12.2012**
(21) Application number: 09716134.3
(22) Date of filing: 17.02.2009
(51) Int. Cl.: G02B 6/44

(54) **OPTICAL FIBRE ORGANISER**
FASEROPTISCHER ORGANISIERER
SYSTÈME D'ASSEMBLAGE DE FIBRES OPTIQUES

(30) Priority: 29.02.2008 GB 0803802
(43) Date of publication of application: 01.12.2010
(73) Proprietor: Tyco Electronics Raychem BVBA, 3010 Kessel-Lo (BE)
(72) Inventor: VASTMANS, Kristof, B-3370 Belgium (BE); SCHURMANS, Eric, B-3450 Belgium (BE); VERMEULEN, Pieter, B-3390 Belgium (BE); RADELET, Christiaan, B-3200 Belgium (BE)
(74) Representative: Leppard, Andrew John
(86) International application number: PCT/GB2009/050155
(87) International publication number: WO 2009/106874

(56) References cited:
- EP-A- 0 333 316
- WO-A-96/10203
- WO-A-97/02504
- DE-U1-202006 006 016
- JP-A- 63 249 116
- US-A- 5 530 786
- US-A1- 2003 099 431

## Description

The present invention relates to the management of optical fibre connections and in particular concerns an optical fibre organiser and splice holders.

A known type of optical fibre organiser is described in EPO,883,828 which discloses a modular system of optical fibre storage trays mounted on one or more support plates with a so-called "breakout module" separate from the storage trays but also mounted on a support plate at one end of a fibre optic splice closure. A guide module having a plurality of curved wall projections, between which optical fibres may be guided, is provided between the breakout module and the optical fibre storage trays. Optical fibre cables are broken out in the breakout module into separate individual mini-tubes which may contain a dozen or so optical fibres that are stored and/or spliced within the organiser enclosure. Each mini-tube normally includes an elongate tensile strength member to take up any applied pulling tension that could damage the fibres if the applied to them. Known organisers typically incorporate means for gripping the strength member projecting from the end of the tube, usually by wedging the strength member between a pair of tapering surfaces for example as described in US-A-6,695,491. Other types of organisers can be found in EP 333316, WO 97254 and WO 96123.

Optical fibre organisers of the aforementioned type are no longer optimal for Fibre To The Home (MH) applications where the total number of optical fibres in a cable or cable element is less than in more traditional cable applications, particularly as the number of individual fibre cables, for example pigtail cables in a distribution frame or customer/subscriber drop cables in a network terminal enclosure, is increasing. Indeed certain applications may require only one or two fibres to be provided for connection in an optical fibre organiser tray, and whist the breakout module of the organiser described in EP0,883,828 is provided as a separate module for handling perhaps a dozen or more fibres from a single cable, the arrangement is not necessarily appropriate for FTTH applications where a single or a pair of fibres may be provided in each individual cable. There is a requirement therefore for a more optimal optical fibre organiser arrangement for FTTH and similar type applications.

There is also a requirement for an optical fibre organiser arrangement that is suitable for use with pre-installed fibre, that is to say where the fibre is installed in the organiser at the factory during manufacturing assembly to enable connections to be more readily made, for example on installation of the organiser when it is desired to make connections with the pre-installed fibre, for example when a new drop cable is to be connected, without disturbing other fibre circuits already connected.

The invention is defined in claim 1.

According to an aspect of the present invention there is provided an optical fibre organiser comprising at least one optical fibre storage means, a support for supporting the said storage means and at least one cable termination retention means for securing incoming/outgoing cable(s) having at least one optical fibre, the or each cable termination retention means being provided on a respective fibre storage means or on the said support, or fixed in relation thereto, adjacent the said respective storage means and being capable of receiving and retaining an end of a respective cable so that optical fibre(s) from incoming/outgoing cable(s) are capable of being fed directly to/from the respective fibre storage means.

In the above aspect of the invention the cable retention means is either provided on a respective fibre storage means or on its support so that the cable retention means is provided in close proximity to the fibre storage region of the storage means for securing the incoming/outgoing cable. This readily improves the management of individual incoming/outgoing cables, particularly where the fibre is fed to or from a respective storage means, for example where the incoming or outgoing cable comprises one or two fibres that are fed to or from a particular storage means of the fibre organiser.

In the context of the present invention it is to be understood that the term "support means" used herein refers to any structure or element that is capable of supporting the storage means and may for example comprise an element or elements of the organiser, for example a fibre organiser enclosure or casing.

In preferred embodiments each cable retention means is integrally formed on the optical fibre storage means support. The present invention also contemplate embodiments where the cable retention means is/are attachably/detachably mounted or mountable on the respective fibre storage means or the support. For example, the cable retention means may be fixed by a snap-fit type connection to the respective optical fibre storage means or its support, for example as described in WO02/073281.

The fibre storage means are movable with respect to the said support, preferably each storage means is independently movable, that is to say independent of the other adjacent storage means, with respect to the support between an open and stowed position to provide independent access to the storage means. The storage means are rotatably mounted with respect to the support.

In preferred embodiments each of the storage means is lockable with respect to other storage means. This has particular advantages in that it enables fibres to be accessed without disturbing the fibres or connections of the other storage means.

In the invention each storage means is pivotally connected to the support about a respective hinge axis. Preferably the or each fibre storage means comprises a tray. By "an optical fibre storage tray" it is meant any generally flat optical fibre storage means, normally having two major storage means, which storage means stores lengths of optical fibre and preferably also stores one or more splices etc. Optical fibre storage trays are sometimes called "cassettes".

In the invention each cable retention means comprises an opening for receiving an end of a respective optical fibre cable with the opening being lined substantially parallel to the hinge axis of the respective optical fibre tray. The opening is aligned substantially coincident with the hinge axis of the respective tray. In this way fibre can be fed to or from a respective storage tray along the hinge axis of that tray so that pivoting of the tray does not over-stress the fibre since the tray will pivot more or less about the elongate axis of the fibre.

The or each cable retention means is arranged to receive a respective cable retention member provided at an end of a respective cable for clamping either the jacket of the cable, a respective mini-tube or a strength member of the cable between the retention means and the cable retention member. Each cable retention means may comprise a tapered opening, that is to say a tapered channel, for receiving a corresponding tapered cable retention member. The tapered opening may comprise a frusto-conical opening for receiving a correspondingly shaped frusto-conical retention member. In this way the clamping force acting on a tensile strength member increases if tension is applied to the cable. The cable termination member may be in the form of a ferrule attached, preferably by crimping, to the outer jacket of the cable that is to be retained.

In preferred embodiments each cable retention means comprises an open-sided channel for receiving a respective cable retention member.

In the invention the organiser comprises an array of optical fibre storage means each pivotally connected to the support about a respective pivot axis and a plurality of cable retention means are arranged side by side on the support adjacent the respective storage means. In this respect a corresponding array of cable retention means is provided adjacent to and alongside the array or storage means i.e. storage trays so that each storage means is associated with at least one adjacent cable retention means.

Preferably the optical fibre organiser further comprises fibre guide means disposed between the cable retention means and the respective storage means and/or between the retention means and a side edge of the support. In this way the fibres can be further guided to and/or from the respective fibre storage means to ensure appropriate fibre management.

The cable retention means may be arranged in a plurality of discrete arrays disposed along the support. In preferred embodiments the arrays are two-dimensional arrays, preferably 2 x 2 arrays. In this way arrays of openings, which may be open sided elongate channels, may be provided along the support in juxtaposition to the respective fibre storage means. The openings may be provided in upstanding projections from the support plate, which are preferably integral with the support plate.

In the invention the optical fibre organiser further comprises pre-installed optical fibre cables and fibres and/or fibre connections. In this way it is possible to minimise the amount of work to be carried out on-site to establish fibre optic connections within the organiser during installation.

The present invention also contemplates an optical fibre management system comprising at least one optical fibre organiser according to the above aspect of the invention. The optical fibre management system may comprise an optical fibre organiser or a plurality of such organisers mounted on or with respect to a drawer type cabinet structure which may comprise or constitute part of a telecommunications equipment rack or distribution frame.

The fibre/cable retention principles of the present invention are therefore applicable not only to fibre organiser devices where multiple fibre splices are organised and managed but also in less complex splice holder arrangements.

Various embodiments of the present invention will now be more particularly described by way of example only, with reference to the accompanying drawings, in which:
Figure 1 is a perspective view of an assembled optical fibre organiser according to an embodiment of the present invention with the organiser attached to a drawer of a telecommunications equipment housing;
Figure 2 is a perspective view of a series of hinged optical fibre storage trays attached to a section of a support plate;
Figure 3 is a more detailed view of the section of the support plate shown in Figure 2;
Figure 4 illustrates the method of fitting a termination sleeve to the end of an optical fibre cable;
Figure 5 shows the cable fitted with the termination sleeve;
Figure 6 shows the optical fibre storage trays of Figure 2 with a single cable positioned ready for fixing in the fibre organiser assembly; and,
Figure 7 is the same as Figure 6 but with the single optical fibre secured;
Figure 8 is a perspective view of an optical fibre storage tray not covered by the claims;
Figure 9 is a schematic representation of a plurality of optical fibre storage trays not covered by the claims;
Figure 10 is a schematic representation of the fibre storage system of figure 9 in which the storage trays are individually movable away from the row of remaining trays by translational upwards movement;
Figure 11 is a schematic representation of the fibre storage system of figure 9 in which the storage trays are individually movable away from the row of remaining trays by rotational upwards movement; and,
Figure 12 is a perspective view of a splice holder not covered by the claims.

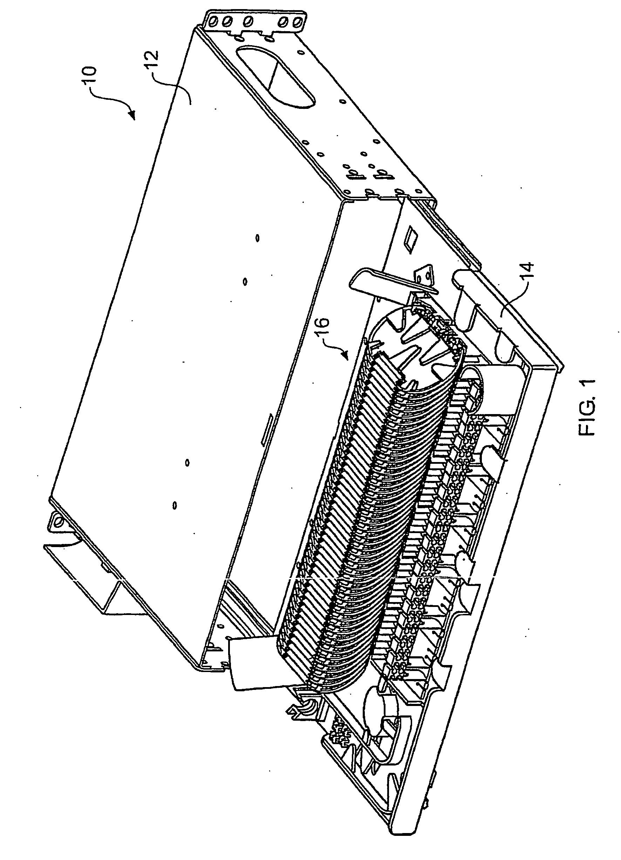

Referring to Figure 1, an optical fibre storage module 10 comprises a generally rectangular housing 12 and a drawer 14 on which is mounted an optical fibre organiser assembly 16. The module 10 may comprise part of an optical fibre distribution frame or rack for the management of optical fibre cables, fibres and connections as is well known in the art. The drawer is mounted on runners and in the drawing of Figure 1 is shown fully deployed to allow open access to the optical fibre organiser assembly 16.

The module 10 is particularly suitable for use with pre-installed fibre, that is to say where the cable/fibre is pre-installed at the factory so that the module 10 can be readily installed to enable fibre connections to be made in a relatively straightforward manner, for example when a new connection is required a drop cable can be readily connected to pre-installed fibre(s). Module 10 may be installed, for example, at a telecommunications exchange building, subscriber premises or in FTTH applications in a subscriber's home.

In addition to the fibre organiser assembly 16 the tray 14 includes various cable and fibre guides, and various guide walls and retaining tabs are provided around the periphery of the drawer 14 for guiding incoming/outgoing fibre/cable to and from the organiser assembly 16. As is well known in the art on entry to known optical fibre organisers, optical fibre cables are "broken out" to separate their individual mini-tubes, each of which may contain a dozen or so optical fibres that are to be arranged and spliced within the organiser enclosure. The peripheral region along the respective sides and front of the drawer 14 is provided with various guide elements for managing this aspect of the cable/fibre management function within the module 10. Management of the individual fibres and/or bundles of fibres is achieved at the local level in the optical fibre organiser 16 and in particular in the individual organiser trays or cassettes 18 which are each hinged to a support or base plate 20 which extends along the drawer from one side to the other. As can be seen in Figure 1, fifty or so organiser trays 18 are mounted on the base plate 20 side by side in a one-dimensional array. The drawings that follow show only a small section comprising eight organiser trays 18 of the optical fibre organiser assembly 16.

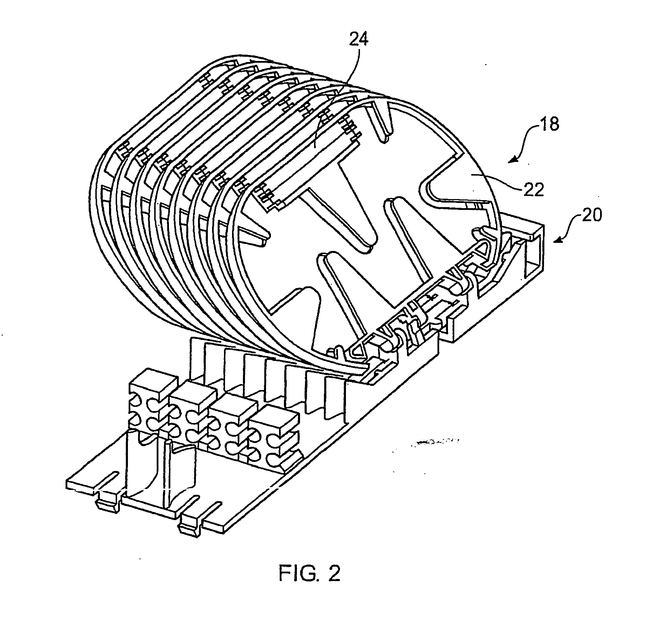

Referring to Figure 2 the optical fibre organiser assembly 16 comprises the optical fibre organiser trays 18 and the base plate support 20. The support trays 18 are hinged to the base plate 18 to enable the individual trays to be pivoted about their respective hinge axis to provide access to the trays when desired. The trays constitute individual optical fibre storage means for storing lengths of fibre, commonly referred to as pigtails, for connection to other optical fibres or components located on or in the individual trays. The trays of the illustrated embodiment comprise various fibre guide elements 22 and holders 24. In the illustrated embodiment two holders 24 are provided on each tray for holding optical fibre splices.

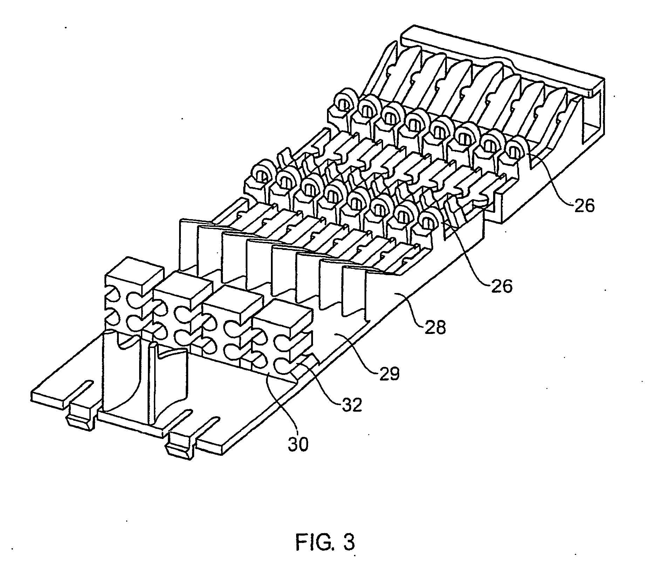

Referring now to Figure 3, which shows a section of the base plate 20. The base plate comprises a moulded structure having a plurality of pairs of mounting means in the form of integral moulded protrusions 26 containing apertures for receiving hinge pins formed on the respective optical fibre storage trays 18. The protrusions 26 and the respective hinge pins define a hinge axis about which the respective trays rotate. Guides 28 are provided on respective sides of the upstanding protrusions 26 for guiding lengths of fibre to and from the respective organiser trays. The guides 28 constitute upstanding protrusions from the planar part 29 of the base plate 20. A plurality of upstanding rectangular blocks 30 are provided adjacent to the guide elements 28. Each block 30 comprises four openings in the form of open channels 32 which are arranged in a 2 x 2 array with the longitudinal axes of the channels 32 being aligned substantially parallel to the respective hinge axis of the trays. In this respect it will be understood that the open channels 32 on one side of a block 30 are aligned substantially in the plane of the respective protrusions 26 and hence hinge axis of one tray and the channels 32 on the other side of the block are aligned in the plane of the hinge axis of the neighbouring tray. The axis of one of the channels on each side of the blocks 30 may be substantially coincident with the respective hinge axis defined by the pairs of protrusions 26, but in practise because the distance between the open channels on one side of a block is relatively small the elongate axis of both channels 32 may be considered to be substantially coincident with the hinge axis of the respective organiser tray.

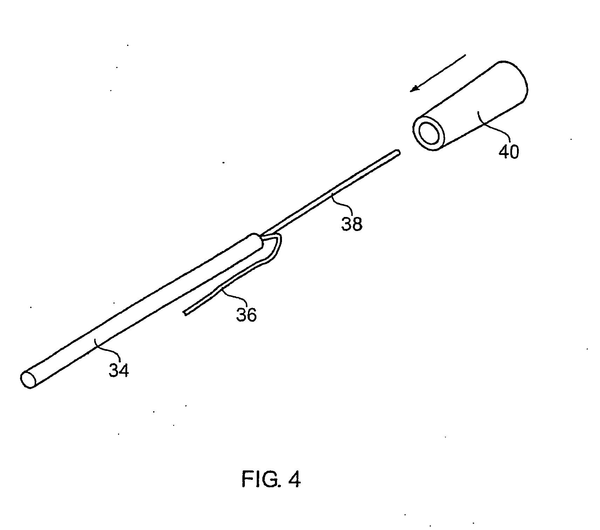

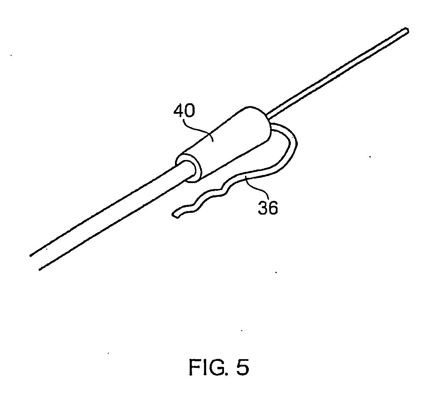

The elongate open channels are slightly tapered so that they have a frusto-conical shape for receiving similar frusto-conical shape cable termination sleeves as will be more clearly described with reference to Figures 4 and 5. The open channels taper inwards in the direction away from the trays.

As previously mentioned on entry to an optical fibre organiser optical fibre cables are broken out to separate their individual mini-tubes containing fibres that are to be arranged and spliced within the organiser enclosure. As shown in Figure 4 each mini-tube 34 comprises an elongate flexible tensile "strength member" 36 in addition to one or more optical fibres 38. Strength members are usually made of Kevlar (RTM) filaments. The end of the optical fibre cable 34 where the fibre 38 is broken out is provided with a cable termination in the form of a sleeve 40 which is fitted over the end of the cable as shown in Figure 5 so that the fibre projects from one end with the strength member 36. The cable termination sleeve 40 has a frusto-conical shape and is fixed to the end of the cable 34 such that it tapers outwards in the direction towards the fibre 38. The strength member 36 is folded back over the surface of the termination sleeve prior to insertion in an open channel 32.

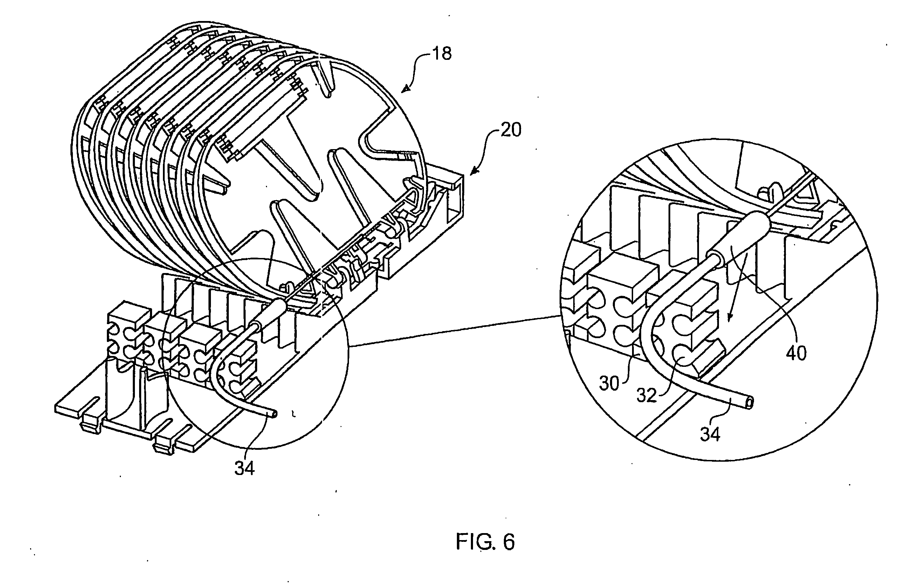

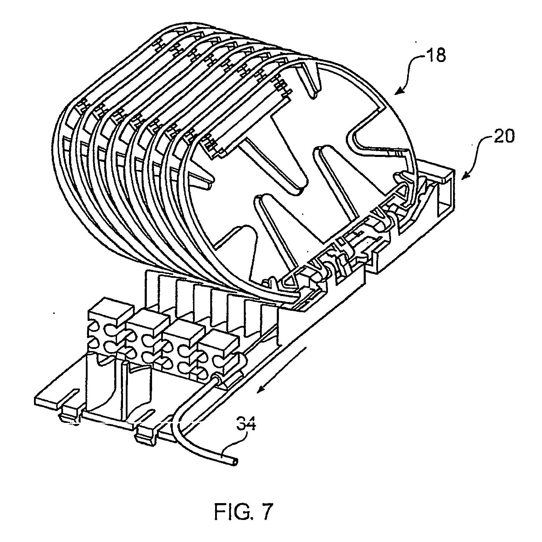

Referring now to Figure 6 it can be seen that an incoming or outgoing cable 42 having a termination sleeve 40 is positioned adjacent to a block 30 prior to location in a respective channel 32. As previously mentioned the elongate channels 32 have a frusto-conical shape for receiving the correspondingly shaped termination sleeves 40 with the respective strength member 36 of a cable wedged in the open elongate channel between the sides of the channel and the outer surface of the termination sleeve 40 to resist axial pull of the installed cable and thereby provide strain relief to the associated fibre or fibres broken out of the cable and fed to the respective organiser tray. The installed cable and fibre is shown in Figure 7 where it can be seen that the fibre from the cable is fed to the organiser tray substantially along the hinge axis of the tray so that the fibre is not over stressed when the tray is rotated about its hinge axis.

In the illustrated embodiment incoming/outgoing optical fibre cables are fixed with respect to the organiser assembly to provide axial strain relief of the fibres by anchoring the cables in appropriately shaped tapered channels 32 which constitute cable termination retention means, however cable retention means in other embodiments may be provided on the respective organiser trays 18 instead of the base plate 20, preferably with the axis of the elongate channels of the retention means being substantially aligned with the hinge axis of the respective tray.

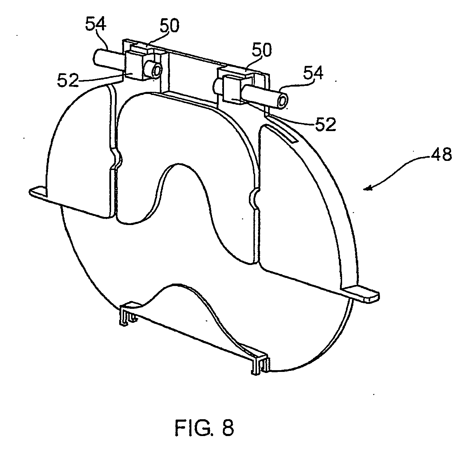

Figure 8 shows an optical fibre storage tray 48 provided with two cable termination retention means 50 which are in the form of respective integral mechanical holding members, each shaped to receive and retain a respective rectangular shaped cable termination block 52 secured to the end of the cable 54.

It is to be understood that the present invention contemplates embodiments for securing all types of cable and although the embodiment of Figures 1 to 7 refers specifically to cables having at least one flexible strength member, for example Kevlar (RTM), the present invention is applicable to all types, particularly all types of small cable, for example outdoor drop cables including those without so called flexible strength member(s), that is to say the present invention also contemplates embodiments suitable for retaining cables that have rigid strength members, for example "flat drop cables", as are typically used in the United States, having two "hard" fibre reinforced strength members, or even cables in which the or each inner (mini) tube or the cable outer jacket provides the axial pull strain mechanical strength element function, without having separate strength members as previously described, for example cables having only one (central) inner tube of a strong and rigid material such as polycarbonate.

The method of fixing the cable to the base plate (Figures 1-7) or the organizer tray (Figure 8) of an optical fibre organiser may depend on the type of cable that is to be secured, for example direct attachment of the cable jacket as shown in Figure 8, flexible, e.g. Kevlar (RTM), termination as described in detail above with reference to Figures 1 - 7, and hard strength member termination. In the arrangement shown in Figure 8 each termination block 52 comprises a ferrule attached directly to the cable jacket, preferably by crimping or other mechanical fixing. It is to be also understood that the cable termination retention means 50 in Figure 8 may also be attachably/detachably mounted on the tray 48 instead of being integral with the tray.

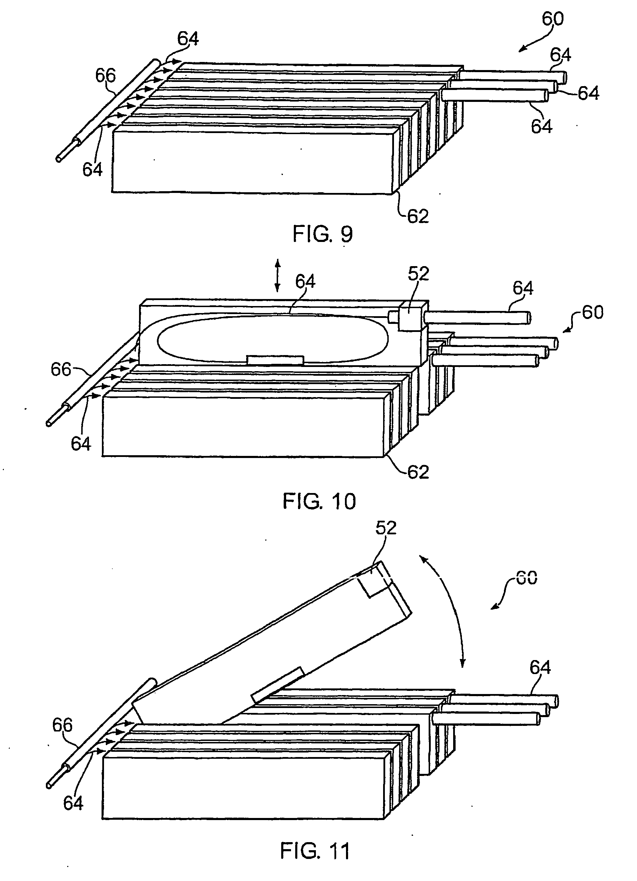

Referring now to Figure 9, an optical fibre organiser 60 comprises a plurality of fibre storage means in the form of an array of individual splice/connection trays 62 arranged side by side along a support (not shown). In the schematic representation of Figure 9 the trays are rectangular in shape and are each associated with a respective optical fibre drop cable 64. Each drop cable 64 is directly attached to an individual tray on one side of the organiser tray array and each tray 62 is arranged and adapted for storing the requisite number of connections/splices corresponding to a single drop cable which may, for example comprise one, two or four or more individual fibres. The optical fibre organiser 60 further comprises a funnelling and breakout system that guides and distributes incoming optical fibres 64 to the individual trays 62. Preferably, the incoming cable 66 and individual fibres 64 are pre-installed in the factory during assembly or during the initial installation of the optical fibre organiser 60. Preferably, the funnelling and breakout system and the individual trays can be locked after the initial installation to provide greater control over the management of the individual optical circuits and/or connections. Each drop cable 64 is attached and terminated directly onto each individual tray, as can best be seen in the drawing of Figure 10, as previously described, particularly with reference to Figure 8. In this respect a drop cables 64 can be added after the initial installation, without disturbing the other fibres, each time a further subscriber/customer connection is to be added. In this respect a drop cable can be added as and when required without disturbing the other fibres, thereby avoiding disturbance and potential transient losses in the circuits that are already connected. This is preferably achieved by locking the feeder cable funnel as well as the trays with drop cables already connected.

The trays 62 can be individually accessed as shown in the two examples of Figures 10 and 11. In the example of Figure 10 each individual tray 62 can be moved out of the array by way of an upwards translational movement, without disturbing the fibres or connections of the other drop cables already connected as those trays may be locked to avoid accidental or undesired access. As can be seen in the example of Figure 10 each tray 62 is movable in a direction perpendicular to the direction of the array of organiser trays 62. By contrast, in the arrangement of Figure 11 the trays 62 are each rotatably mounted about a pivot axis at or towards the end of the tray adjacent to the incoming fibre 64. The trays are each individually movable about the pivot axis to provide access to the fibre and optical components stored on the tray without disturbing the fibres or connections on the other trays.

The arrangements shown in Figures 8 to 11 are particularly suitable for connecting customer drop cables in a distribution box or cabinet, that is to say at a connection node in a network, where the drop cables can be directly attached to the individual splice trays, not necessarily in racks and shelves.

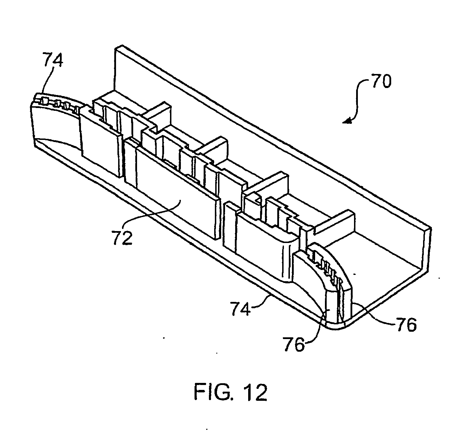

Figure 12 shows a splice holder 70 for retaining a mechanical or fusion optical fibre splice connection. The splice holder 70 is formed as a single integral element, preferably a moulded plastics element. The holder includes a splice retention means 71 comprising a plurality of upstanding resilient projections 72 which are arranged to exert a moderate resilient clamping force on a splice connection located within the region defined by the projections as is well known in the art. A cable retention means 74 is provided at each end of the splice retention region for guiding and retaining cable or fibre fed to/from a splice retained by and located in the splice retention means. Each cable retention means comprises at least a pair of upstanding curved parallel projections 76 that receive and retain either a cable termination member or the like on the terminal end of an incoming/outgoing cable, a strength member or the jacket of an incoming/outgoing optical fibre cable as previously described with reference to the embodiments and examples of Figures 1-11. The splice holder of Figure 12 is particularly but not exclusively suitable for use in FTTH fibre environments, in particular for "in-room" splice connections. The same fibre/cable detention principles as described here are therefore applicable not only to fibre organiser devices where multiple fibre splices are managed but also in less complex splice holder arrangements as shown in Figure 12.

## Claims

1. An optical fibre organiser (16) comprising at least one optical fibre storage means (18), a support (20) for supporting the said storage means and a plurality of cable termination retention means (30) for securing incoming/outgoing cables (34) having at least one optical fibre (38) and, each cable termination retention means being provided on the said support, or fixed in relation thereto, adjacent the said respective storage means and being capable of receiving and retaining an end of a respective cable so that optical fibres from incoming/outgoing cables are capable of being fed directly to/from the respective fibre storage means, wherein each storage means is pivotally connected to the said support about a respective hinge axis, each cable termination retention means comprises an opening (32) for receiving an end of a respective optical fibre cable with the opening being aligned substantially parallel to and aligned substantially coincident with the hinge axis of the respective storage means, and wherein the organiser comprises an array of optical fibre storage means each pivotally connected to the said support about a respective hinge axis, a plurality of said cable termination retention means arranged side by side on the said support adjacent the respective storage means and pre-installed optical fibre cables and fibres and/or fibre connections.

2. An optical fibre organiser as claimed in Claim 1 wherein the or each cable termination retention means is integrally formed on the support.

3. An optical fibre organiser as claimed in Claim 1 or 2 wherein each of said fibre storage means is at least one of movable with respect to the said support, independently movable with respect to the said support between an open and stowed position to provide independent access to the said storage means, rotatably mounted with respect to the said support, and lockable with respect to other said storage means.

4. An optical fibre organiser as claimed in any preceding claim wherein the or each cable termination retention means is arranged to receive a respective cable retention member (40) provided at one of an end of a respective cable for securing the cable thereto, and an end of a respective cable for clamping a tensile strength member (36) of the cable between the retention means and cable retention member.

5. An optical fibre organiser as claimed in Claim 4 wherein the or each cable retention means comprises one of a tapered opening for receiving a corresponding tapered cable retention member, and a frusto-conical opening for receiving a correspondingly shaped frusto-conical retention member.

6. An optical fibre organiser as claimed in Claim 1 further comprising optical fibre guide means (28) disposed between the said retention means and the respective storage means and/or between the said retention means and a side edge of the said support.

7. An optical fibre organiser as claimed in Claim 6, wherein said cable termination retention means are arranged in a plurality of discrete arrays disposed along the said support.

8. An optical fibre organiser as claimed in Claim 7 wherein said arrays are 2 dimensional arrays, preferably 2x2 arrays.

9. An optical fibre organiser as claimed in any preceding claim wherein each fibre storage means comprises an optical fibre organiser cassette, preferably in the form of a tray type structure.

10. An optical fibre management system comprising at least one optical fibre organiser as claimed in any preceding claim mounted on or with respect to a drawer type structure (14) of a telecommunications equipment housing (12).

11. An optical fibre organiser as claimed in any preceding claim wherein the said optical fibre comprises at least one flexible tensile strength member for engagement with the said retention means for axial strain relief of the cable.

## Patentansprüche

1. Organisationsvorrichtung (16) für optische Fasern, die aufweist: mindestens ein Speichermittel (18) für optische Fasern; eine Halterung (20) für das Halten des Speichermittels; und eine Vielzahl von Kabelabschlussarretiermitteln (30) für das Sichern der ankommenden/abgehenden Kabel (34) mit mindestens einer optischen Faser (38), und wobei jedes Kabelabschlussarretiermittel an der Halterung bereitgestellt oder in Beziehung dazu benachbart dem jeweiligen Speichermittel befestigt wird und in der Lage ist, ein Ende eines jeweiligen Kabels aufzunehmen und zu halten, so dass die optischen Fasern von den ankommenden/abgehenden Kabeln direkt zu/von dem jeweiligen Faserspeichermittel geführt werden können, wobei jedes Speichermittel drehbar mit der Halterung um eine jeweilige Gelenkachse verbunden ist, wobei jedes Kabelabschlussarretiermittel eine Öffnung (32) für das Aufnehmen eines Endes eines jeweiligen optischen Faserkabels aufweist, wobei die Öffnung im Wesentlichen parallel zur und im Wesentlichen übereinstimmend mit der Gelenkachse des jeweiligen Speichermittels ausgerichtet ist, und wobei die Organisationsvorrichtung aufweist: eine Anordnung von Speichermitteln für optische Fasern, die jeweils drehbar mit der Halterung um eine jeweilige Gelenkachse verbunden sind; eine Vielzahl der Kabelabschlussarretiermittel, die nebeneinander liegend auf der Halterung benachbart dem jeweiligen Speichermittel angeordnet sind; und vorher installierte optische Faserkabel und Fasern und/oder Faseranschlüsse.

2. Organisationsvorrichtung für optische Fasern nach Anspruch 1, bei der das oder jedes Kabelabschlussarretiermittel zusammenhängend auf der Halterung ausgebildet ist.

3. Organisationsvorrichtung für optische Fasern nach Anspruch 1 oder 2, bei der jedes der Faserspeichermittel mindestens ein bewegliches Mittel mit Bezugnahme auf die Halterung ist, unabhängig beweglich mit Bezugnahme auf die Halterung zwischen einer offenen und einer Verstauposition, um einen unabhängigen Zugang zum Speichermittel zu bewirken, mit Bezugnahme auf die Halterung drehbar montiert und mit Bezugnahme auf das andere Speichermittel verriegelbar.

4. Organisationsvorrichtung für optische Fasern nach einem der vorhergehenden Ansprüche, bei der das oder jedes Kabelabschlussarretiermittel angeordnet ist, um ein jeweiliges Kabelarretierelement (40), das an einem von einem Ende eines jeweiligen Kabels für das Sichern des Kabels daran vorhanden ist, und ein Ende eines jeweiligen Kabels für das Festklemmen eines Zugfestigkeitselementes (36) des Kabels zwischen dem Arretiermittel und dem Kabelarretierelement aufzunehmen.

5. Organisationsvorrichtung für optische Fasern nach Anspruch 4, bei der das oder jedes Kabelarretiermittel eine von einer kegelförmigen Öffnung für das Aufnehmen eines entsprechenden kegelförmigen Kabelarretierelementes und einer kegelstumpfförmigen Öffnung für das Aufnehmen eines entsprechend geformten kegelstumpfförmigen Arretierelementes aufweist.

6. Organisationsvorrichtung für optische Fasern nach Anspruch 1, die außerdem ein Führungsmittel (28) für optische Fasern aufweist, die zwischen dem Arretiermittel und dem jeweiligen Speichermittel und/oder zwischen dem Arretiermittel und einem Seitenrand der Halterung angeordnet ist.

7. Organisationsvorrichtung für optische Fasern nach Anspruch 6, bei der die Kabelabschlussarretiermittel in einer Vielzahl von einzelnen Anordnungen angeordnet sind, die längs der Halterung angeordnet sind.

8. Organisationsvorrichtung für optische Fasern nach Anspruch 7, bei der die Anordnungen zweidimensionale Anordnungen sind, vorzugsweise 2x2-Anordnungen.

9. Organisationsvorrichtung für optische Fasern nach einem der vorhergehenden Ansprüche, bei der jedes Faserspeichermittel eine Organisationskassette für optische Fasern aufweist, vorzugsweise in der Form einer Muldenstruktur.

10. Handhabungssystem für optische Fasern, das mindestens eine Organisationsvorrichtung für optische Fasern nach einem der vorhergehenden Ansprüche aufweist, die in einer oder mit Bezugnahme auf eine Einschubstruktur (14) eines Telekommunikationsanlagengehäuses (12) montiert ist.

11. Organisationsvorrichtung für optische Fasern nach einem der vorhergehenden Annsprüche, bei der die optische Faser mindestens ein elastisches Zugfestigkeitselement für einen Eingriff mit dem Arretiermittel für eine axiale Zugentlastung des Kabels aufweist.

## Revendications

1. Platine d'assemblage de fibres optiques (16), comprenant au moins un moyen de stockage de fibres optiques (18), un support (20) pour supporter ledit moyen de stockage et plusieurs moyens de retenue des extrémités de câbles (30) pour fixer les câbles rentrants/sortants (34), comportant au moins une fibre optique (38), chaque moyen de retenue des extrémités de câbles étant agencé sur ledit support, ou fixé par rapport à celui-ci, près dudit moyen de stockage respectif, et pouvant recevoir et retenir une extrémité d'un câble respectif, de sorte que les fibres optiques des câbles rentrants/sortants peuvent être amenés directement vers le moyen de stockage de fibres respectif et à partir de celui-ci, chaque moyen de stockage étant connecté de manière pivotante audit support autour d'un axe de charnière respectif, chaque moyen de retenue des extrémités de câbles comprenant une ouverture (32) pour recevoir une extrémité d'un câble à fibres optiques respectif, l'ouverture étant alignée de manière pratiquement parallèle par rapport à l'axe de charnière du moyen de stockage respectif et étant alignée de manière pratiquement coïncidente avec celui-ci, la platine d'assemblage comprenant un réseau de moyens de stockage de fibres optiques, connectés chacun de manière pivotante audit support autour d'un axe de charnière respectif, plusieurs desdits moyens de retenue des extrémités de câbles étant agencés côte à côte sur ledit support, près du moyen de stockage respectif et de câbles à fibres optiques installés d'avance et de fibres et/ou de connexions de fibres.

2. Platine d'assemblage de fibres optiques selon la revendication 1, dans laquelle le ou chaque moyen de retenue des extrémités de câbles est formé d'une seule pièce sur le support.

3. Platine d'assemblage de fibres optiques selon les revendications 1 ou 2, dans laquelle chacun desdits moyens de stockage de fibres est au moins un moyen sélectionné parmi un moyen pouvant être déplacé par rapport audit support, un moyen pouvant être déplacé indépendamment par rapport audit support, entre une position ouverte et une position de rangement, pour établir un accès indépendant audit moyen de stockage, un moyen monté de manière rotative par rapport audit support, et un moyen pouvant être verrouillé sur l'autre dit moyen de stockage.

4. Platine d'assemblage de fibres optiques selon l'une quelconque des revendications précédentes, dans laquelle le ou chaque moyen de retenue des extrémités de câbles est agencé de sorte à recevoir un élément de retenue de câbles respectif (40) agencé au niveau d'une extrémité d'un câble respectif pour y fixer le câble, et d'une extrémité d'un câble respectif pour serrer un élément de résistance à la traction (36) du câble entre le moyen de retenue et l'élément de retenue du câble.

5. Platine d'assemblage de fibres optiques selon la revendication 4, dans laquelle le ou chaque moyen de retenue de câblés comprend une ouverture, une ouverture effilée pour recevoir un élément de retenue de câbles effilé correspondant, ou une ouverture en tronc de cône pour recevoir un élément de retenue ayant une forme correspondante en tronc de cône.

6. Platine d'assemblage de fibres optiques selon la revendication 1, comprenant en outre un moyen de guidage des fibres optiques (28), agencé entre ledit moyen de retenue et le moyen de stockage respectif, et/ou entre ledit moyen de retenue et un bord latéral dudit support.

7. Platine d'assemblage de fibres optiques selon la revendication 6, dans laquelle lesdits moyens de retenue des extrémités de câbles sont agencés dans plusieurs réseaux distincts agencés le long dudit support.

8. Platine d'assemblage de fibres optiques selon la revendication 7, dans laquelle lesdits réseaux sont des réseaux bidimensionnels, de préférence des réseaux de 2 x 2.

9. Platine d'assemblage de fibres optiques selon l'une quelconque des revendications précédentes, dans laquelle chaque moyen de stockage des fibres comprend une cassette d'assemblage de fibres optiques, de préférence sous la forme d'une structure de type plateau.

10. Système de gestion de fibres optiques, comprenant au moins une platine d'assemblage de fibres optiques selon l'une quelconque des revendications précédentes, montée sur une structure de type tiroir (14) d'un boîtier d'équipement de télécommunications (12).

11. Platine d'assemblage de fibres optiques selon l'une quelconque des revendications précédentes, dans laquelle ladite fibre optique comprend au moins un élément de résistance à la traction flexible, destiné à s'engager dans ledit moyen de retenue pour assurer une décharge de traction du câble.
